# EUROPÄISCHE PATENTSCHRIFT

(11) **EP 4 169 367 B1**
(45) Veröffentlichungstag und Bekanntmachung des Hinweises auf die Patenterteilung: **28.02.2024**
(21) Anmeldenummer: 22185465.6
(22) Anmeldetag: 18.07.2022
(51) Int. Cl.: A01D 34/74, A01D 101/00

(54) **HANDGEFÜHRTER RASENMÄHER UND VERFAHREN ZUM EINSTELLEN DER SCHNITTHÖHE EINES HANDGEFÜHRTEN RASENMÄHERS**
WALK-BEHIND LAWN MOWER AND METHOD OF ADJUSTING THE CUTTING HEIGHT OF A WALK-BEHIND LAWN MOWER
TONDEUSE À GAZON À CONDUCTEUR MARCHANT ET PROCÉDÉ DE RÉGLAGE DE LA HAUTEUR DE COUPE D'UNE TONDEUSE À GAZON À CONDUCTEUR MARCHANT

(30) Priorität: 13.10.2021 DE 102021126513; 13.10.2021 DE 202021105544 U
(43) Veröffentlichungstag der Anmeldung: 26.04.2023
(73) Patentinhaber: AL-KO Geräte GmbH, 89359 Kötz (DE)
(72) Erfinder: Dietrich, Jürgen, 89250 Senden (DE); Munkenast, Gert, 89346 Bibertal (DE)
(74) Vertreter: Dr. Binder & Binder GbR

(56) Entgegenhaltungen:
- EP-A1- 1 749 432
- EP-A1- 2 371 197
- CN-B- 103 039 185
- DE-A1- 19 844 439
- GB-A- 2 367 475
- GB-A- 2 413 254

## Beschreibung

Die Erfindung betrifft einen handgeführten Rasenmäher, zumindest aufweisend ein Gehäuse, zwei an dem Gehäuse schwenkbar gelagerte Räderpaare, und eine Höhenverstelleinrichtung zum Einstellen der Schnitthöhe eines Mähwerkes des Rasenmähers, mittels der die Räderpaare um jeweils eine Schwenkachse in mindestens zwei unterschiedliche Positionen verschwenkt werden können, wobei die Höhenverstelleinrichtung mindestens eine Kopplungseinrichtung aufweist, über die die Schwenkachsen der Räderpaare miteinander gekoppelt sind, und eine beweglich an dem Gehäuse gelagerte Betätigungseinrichtung für die Höhenverstelleinrichtung, und die Betätigungseinrichtung eine Kulisse aufweist, in welche ein starr mit der Kopplungseinrichtung verbundenes Arretierelement in unterschiedliche Positionen eingreift, sodass mit jeder Position des Arretierelementes eine unterschiedliche Position der Räderpaare und eine unterschiedliche Schnitthöhe eingestellt wird, wobei die Kopplungseinrichtung mindestens eine Verbindungsstange aufweist, welche die Schwenkachsen der Räderpaare gelenkig miteinander verbindet, und das Arretierelement ein Zapfen ist, welcher an der mindestens einen Verbindungsstange angeordnet ist und in die Zahnzwischenräume des eines Zahnkranzabschnittes der Kulisse eingreift.

Weiter betrifft die Erfindung ein Verfahren zum Einstellen der Schnitthöhe eines handgeführten Rasenmähers.

### STAND DER TECHNIK

Aus der Druckschrift DE 10 2017 205 289 A1 ist ein Bodenbearbeitungsgerät, beispielsweise ein Rasenmäher, mit einem Gehäuse, an dem zumindest zwei Räder schwenkbar gelagert sind, mit einer Höhenverstellvorrichtung zur Schnitthöhenverstellung, über die die Räder um eine Schwenkachse relativ zum Gehäuse in zumindest zwei unterschiedliche Positionen fixierbar sind, wobei die Höhenverstellvorrichtung ein Koppelglied zur Kopplung der Schwenkbewegungen der Räder und ein Betätigungselement aufweist, bekannt. Bei diesem Rasenmäher ist das Betätigungselement translatorisch beweglich am, insbesondere im, Gehäuse gelagert und das Betätigungselement über einen Fixierbereich formschlüssig mit dem Koppelglied verbunden, wobei ein Betätigungsbereich des Betätigungselements und der Fixierbereich relativ zueinander unbeweglich ausgebildet sind.

Bei dieser Ausführungsform der Schnitthöheneinstellung wird das Betätigungselement manuell translatorisch bewegt und dabei aus dem Fixierbereich des Koppelgliedes gelöst. Das Formschlusselement ist starr mit dem Koppelglied verbunden. Weiterhin sind auch das Betätigungselement und der Fixierbereich zueinander unbeweglich ausgebildet.

Aus der Druckschrift CN 2 10 580 034 U ist ein gattungsgemäßer handgeführter Rasenmäher mit einer Höhenverstelleinrichtung bekannt.

Die Druckschriften GB 2 367 475 A und EP 1 749 432 A1 offenbaren jeweils einen handgeführten Rasenmäher mit einer gattungsgemäßen Höhenverstelleinrichtung mit einer Kulisse, in die ein Arretierelement eingreift. Allerdings ist bei diesen Höhenverstelleinrichtungen die Kulisse relativ zur Kopplungseinrichtung unbeweglich, also fest mit dieser verbunden, und dem Verstellen der Höhe wird das Arretierelement relativ zur Kulisse bewegt. Weiterhin wird die Höhe nicht durch eine translatorische Bewegung des Druckelementes ausgelöst.

Als weiteren Stand der Technik wird noch auf die Druckschriften GB 2 413 254 A und EP 2 371 197 A1 verwiesen. Es ist Aufgabe der Erfindung, eine alternative Schnitthöheneinstellung für handgeführte Rasenmäher und ein Verfahren zum Einstellen der Schnitthöhe zu schaffen.

Diese Aufgabe wird durch die Merkmale der unabhängigen Patentansprüche gelöst. Vorteilhafte Weiterbildungen der Erfindung sind Gegenstand untergeordneter Ansprüche.

Demgemäß schlagen die Erfinder vor, einen handgeführten Rasenmäher, zumindest aufweisend ein Gehäuse, zwei an dem Gehäuse schwenkbar gelagerte Räderpaare, und eine Höhenverstelleinrichtung zum Einstellen der Schnitthöhe eines Mähwerkes des Rasenmähers, mittels der die Räderpaare um jeweils eine Schwenkachse in mindestens zwei unterschiedliche Positionen verschwenkt werden können, wobei die Höhenverstelleinrichtung mindestens eine Kopplungseinrichtung aufweist, über die die Schwenkachsen der Räderpaare miteinander gekoppelt sind, eine beweglich an dem Gehäuse gelagerte Betätigungseinrichtung für die Höhenverstelleinrichtung, und die Betätigungseinrichtung eine Kulisse aufweist, in welche ein starr mit der Kopplungseinrichtung verbundenes Arretierelement in unterschiedliche Positionen eingreift, sodass mit jeder Position des Arretierelementes eine unterschiedliche Position der Räderpaare und eine unterschiedliche Schnitthöhe eingestellt wird, wobei die Kopplungseinrichtung mindestens eine Verbindungsstange aufweist, welche die Schwenkachsen der Räderpaare gelenkig miteinander verbindet, und das Arretierelement ein Zapfen ist, welcher an der mindestens einen Verbindungsstange angeordnet ist und in die Zahnzwischenräume eines Zahnkranzabschnittes der Kulisse eingreift, dahingehend zu verbessern, dass die Betätigungseinrichtung ein manuell betätigbares Druckelement aufweist, welches translatorisch bewegbar ist, um die Kulisse von dem Zapfen zu lösen, wobei das Druckelement relativ zu der Kulisse unbeweglich gelagert ist, sodass eine Betätigung des Druckelementes ein Herunterschieben der Kulisse bewirkt, während der Zapfen starr in seiner Position bleibt und sich nicht bewegt.

Es wird darauf hingewiesen, dass die Erfindung zwar an einem Rasenmäher beschrieben wird, die erfindungswesentlichen Merkmale jedoch auf beliebige handgeführte Bodenbearbeitungsgeräte wie zum Beispiel Sichelmäher, Vertikutierer etc. übertragbar sind und dies ebenfalls im Rahmen der Erfindung liegt.

Der erfindungsgemäße Rasenmäher weist neben dem mehrteiligen Gehäuse und dem Mähwerk noch weitere Bestandteile wie insbesondere einen Verbrennungsmotor oder einen Elektromotor zum Antreiben des Mähwerkes, einen Handgriffbügel zum Anschieben des Rasenmähers etc. auf. Der Motor und das Mähwerk sind zumindest teilweise innerhalb des Gehäuses angeordnet. Das Mähwerk ist an dem Gehäuse aufgehängt.

Weiterhin weist der Rasenmäher zwei Räderpaare, insbesondere ein hinteres und ein vorderes Räderpaar, auf. Im Folgenden beziehen sich die relativen Begriff "vorne" und "hinten" auf die Richtung eines Vorwärtsbewegung des Rasenmähers beim Mähvorgang. Die Begriffe "unten" und "oben" beziehen sich auf einen vom Rasenmäher zu mähenden Untergrund.

Die beiden Räder der Räderpaare weisen jeweils eine mittige Rotationsachse auf, um die sich die Räder bei der Bewegung des Rasenmähers drehen. Weiterhin sind die beiden Räder beziehungsweise die Räderpaare jeweils um eine Schwenkachse schwenkbar. Vorzugsweise ist zumindest die Schwenkachse des vorderen Räderpaares an dem Gehäuse fixiert und schwenkbar gelagert. Besonders bevorzugt sind beide Schwenkachsen an dem Gehäuse fixiert. Dadurch ergibt sich, dass das Gehäuse und das an dem Gehäuse fixierte Mähwerk beim Verschwenken der Räderpaare hoch und runter bewegt wird und seine Höhe ändert. Die Rotationsachsen und die Schwenkachsen sind jeweils beabstandet zu einander und verlaufen vorteilhafterweise parallel. Weiterhin vorteilhaft sind die Rotationsachsen und die Schwenkachsen jeweils miteinander verbunden, vorteilhafterweise starr verbunden. Erfindungsgemäß sind zudem die Schwenkachsen über die Kopplungseinrichtung miteinander gekoppelt. Vorzugsweise ergibt sich aus der Kopplung der Schwenkachsen auch eine Kopplung der Schwenkbewegungen der Räderpaare, sodass die Räderpaare stets gemeinsam und gleichzeitig verschwenkt werden. Die Auslenkung der Räderpaare beim Verschwenken kann in Abhängigkeit der Räderdruckmesser, Abstände der Achsen etc. variieren, wobei sich jedoch hinten und vorne ein einheitlicher Hub des Mähwerkes ergibt.

Die Räder können in unterschiedlichen Positionen fixiert werden, wobei in jeder Position der Abstand des Gehäuses mit dem Mähwerk zum Boden unterschiedlich ist. Dadurch ergibt sich in jeder Räderposition eine unterschiedliche Höhe des Mähwerkes beziehungsweise unterschiedliche Schnitthöhe.

Erfindungsgemäß weist die Betätigungseinrichtung eine Kulisse auf. In die Kulisse greift ein starr mit der Kopplungseinrichtung verbundenes Arretierelement ein, wobei je nach Position, in der das Arretierelement in die Kulisse eingreift, die Räder in unterschiedlicher Position beziehungsweise das Mähwerk mit unterschiedlicher Schnitthöhe eingestellt ist. Die Kulisse wird mit der Betätigungseinrichtung mitbewegt, das heißt sie bewegt sich relativ zur Kopplungseinrichtung und dem starr daran angeordneten Arretierelement.

Sowohl die Betätigungseinrichtung als auch die Kopplungseinrichtung sind relativ zum Gehäuse bewegbar. Bei einer Schwenkbewegung der Räder bewegt sich die Kopplungseinrichtung mit dem Arretierelement relativ zu dem Gehäuse vor und zurück. Die Betätigungseinrichtung mit der Kulisse bewegt sich relativ zu dem Gehäuse hoch und runter.

Erfindungsgemäß weist die Betätigungseinrichtung ein manuell betätigbares Druckelement auf, um die Kulisse von dem Arretierelement zu lösen. Das Druckelement ist vorteilhafterweise als ein federgelagerter Druckknopf ausgebildet, welcher sich außen an dem Gehäuse befindet. Bei einer Betätigung des Druckknopfes, erfindungsgemäß einer translatorisch nach unten gerichteten Drückbewegung, wird die Kulisse nach unten bewegt beziehungsweise gedrückt. Entsprechend ist das Druckelement relativ zu der Kulisse unbeweglich gelagert, beispielsweise mittels einer Stange verbunden. Beim Herunterdrücken der Kulisse löst sich der Eingriff des Arretierelementes, wobei sich das Arretierelement dabei nicht bewegt.

Das Druckelement beziehungsweise der Druckknopf ist vorteilhafterweise federgelagert, sodass beim Nicht-Betätigen beziehungsweise Loslassen des Druckknopfes dieser und die damit starr verbundene Kulisse wieder in die Ausgangsposition zurückkehrt.

Die bevorzugte Ausführungsform sieht weiterhin vor, dass die Kulisse einen Zahnkranzabschnitt mit mehreren Zahnzwischenräumen aufweist, in die das Arretierelement eingreift. Vorteilhafterweise weist der Zahnkranzabschnitt eine gebogene, insbesondere nach oben gebogene, Form auf, wobei die Zähne nach oben stehen. Die Zahnzwischenräume sind also vorteilhafterweise nach oben offen. Das Arretierelement greift somit von oben in den jeweiligen Zahnzwischenraum ein. Jeder Zahnzwischenraum definiert vorzugsweise eine Position des Arretierelementes und somit eine Schwenkposition der Räder, also wiederum einen bestimmten Abstand des Gehäuses zum Boden beziehungsweise eine bestimmte Schnitthöhe des Mähwerkes.

Weiterhin vorteilhaft weist der Zahnkranzabschnitt mehrere Zahnzwischenräume auf, beispielsweise drei, vier, fünf oder mehr, sodass die Schnitthöhe möglichst variabel und in vielen beliebigen Höhen eingestellt werden kann.

Erfindungsgemäß weist die Kopplungseinrichtung mindestens eine Verbindungsstange auf, welche die Schwenkachsen der Räderpaare gelenkig miteinander verbindet. Die mindestens eine Verbindungsstange ist vorteilhafterweise jeweils über eine Koppelachse mit den Schwenkachsen der Räderpaare verbunden. Der Einfachheit halber ist bevorzugt nur eine Verbindungsstange an nur einer Seite des Rasenmähers ausgebildet. In einer einfachen Ausführungsform ist die Verbindungsstange direkt beziehungsweise unmittelbar mit den Schwenkachsen verbunden. In einer bevorzugten Ausführungsform ist die Verbindungsstange lediglich indirekt, beispielsweise jeweils über eine weitere Koppelachse, gelenkig mit den Schwenkachsen verbunden. Die Verbindungsstange ist also bevorzugt jeweils über die Koppelachse mit der Schwenkachse und weiter mit der Rotationsachse der Räderpaare verbunden. Die drei Achsen jedes Räderpaares, also Koppelachse, Schwenkachse und Rotationsachse, sind vorteilhafterweise in der vorgenannten Reihenfolge miteinander verbunden und bilden jeweils ein Dreieck aus, wobei sich die beiden hinten und vorne ausgebildeten Dreiecke unterscheiden. Je nach Position der Räderpaare und Schwenkachsen, ändert sich die Form des Dreiecks.

Noch weiter sieht eine bevorzugte Ausführungsform vor, dass das Gehäuse mit der Höhenverstelleinrichtung verbunden ist, insbesondere ist bevorzugt die Kopplungseinrichtung mit dem Gehäuse federbelastet verbunden. Das Gehäuse ist zum einen an den Schwenkachsen der Räderpaare fixiert und zum anderen mit der Kopplungseinrichtung verbunden. Werden die Räderpaare um die Schwenkachsen bewegt, bewegt sich daher zwangsläufig das Gehäuse mit und der Abstand des Gehäuses zu den Rädern und zum Boden wird verändert.

Die Verbindung der Kopplungseinrichtung zu dem Gehäuse ist bevorzugt federbelastet, um die Räderpaare, wenn der Eingriff des Arretierelementes in die Kulisse gelöst ist, nach hinten in eine Neutralposition zu ziehen. Als Neutralposition gilt eine höchste Position des Gehäuses beziehungsweise Mähwerkes.

Bevorzugt ist hierfür eine Zugfeder vorgesehen, welche die Verbindung zum Gehäuse ausbildet. Die Zugfeder ist vorteilhafterweise einerseits mit der mindestens einen Verbindungsstange und andererseits mit dem Gehäuse verbunden. Die Zugfeder zieht vorteilhafterweise die Verbindungsstange mit dem daran verbundenen vorderen Räderpaare nach hinten und erleichtert somit das Anheben des Rasenmähers am Gehäuse.

Weiterhin erfindungsgemäß ist das Arretierelement ein Zapfen, welcher an der mindestens einen Verbindungsstange angeordnet ist und in die Zahnzwischenräume des Zahnkranzabschnittes eingreift. Das Arretierelement ist vorteilhafterweise starr an der Verbindungsstange ausgebildet, insbesondere vorteilhaft einstückig beziehungsweise einteilig mit der Verbindungsstange. Der Zapfen greift in die Zahnzwischenräume von oben ein und wird dort vorteilhafterweise formschlüssig und/oder kraftschlüssig gehalten. Besonders günstig ist die Form der Zahnzwischenräume zumindest teilweise komplementär zu der Form des Zapfens.

In einer einfachen und bevorzugten Ausführungsform weist das Gehäuse einen Handgriff auf, mit dem das Gehäuse manuell hochgehoben und runter gedrückt werden kann. Der Handgriff ist vorteilhafterweise in unmittelbarer Nähe zum Druckknopf der Betätigungseinrichtung angeordnet. Vorteilhafterweise können der Druckknopf und der Handgriff von einer Hand eines Anwenders gleichzeitig einhändig bedient werden.

In einer weiteren Ausführungsform ist an dem Gehäuse eine Anzeige angeordnet, auf der die jeweils eingestellte Position und/oder Schnitthöhe angezeigt wird. Beispielsweise ist die Anzeige mit dem Arretierelement gekoppelt, sodass eine Änderung der Position des Arretierelementes in dem Zahnkranzabschnitt eine Änderung der angezeigten Position und/oder Schnitthöhe bewirkt.

Die Erfindung betrifft auch ein Verfahren zum Einstellen der Schnitthöhe eines erfindungsgemäßen, voranstehend beschriebenen handgeführten Rasenmähers, zumindest aufweisend die folgenden Verfahrensschritte:
- Manuelles Betätigen des Druckelementes zum Lösen des Zahnkranzabschnittes von dem Arretierelement,
- Manuelles Anheben oder Absenken des Gehäuses und dabei Verschwenken der Räderpaare in eine andere Position, und
- Loslassen des Druckelementes, sodass das Arretierelement wieder in den Zahnkranzabschnitt eingreift und das Mähwerk in einer der Position des Arretierelementes in dem Zahnkranzabschnitt entsprechenden Schnitthöhe eingestellt ist.

Als Ausgangsposition ist die Schnitthöhe des Mähwerkes beispielsweise auf eine minimale Höhe eingestellt und der Zapfen greift in einem ersten Zahnzwischenraum ein. Die Räderpaare befinden sich in einer ersten Position, wobei auch der Abstand des Gehäuses mit dem Mähwerk zum Boden minimal ist.

In einem ersten Schritt wird der Druckknopf betätigt, also herunter gedrückt, wobei die Kulisse mit nach unten gedrückt wird. Dabei löst sich der Zapfen aus einem Zahnzwischenraum, da der Zahnkranzabschnitt nach unten bewegt wird und der Zapfen starr an seiner Position bleibt. Ohne die Fixierung des Zapfens in dem Zahnkranzabschnitt können die Räderpaare frei um die Schwenkachse bewegt werden.

In einem nächsten Schritt kann daher das Gehäuse an dem Handgriff angehoben werden, wobei die Räderpaare verschwenkt werden. Beim Anheben des Gehäuses vergrößert sich automatisch die Schnitthöhe. Ist die Schnitthöhe groß genug, ist also das Gehäuse weit genug angehoben, kann als nächstes der Druckknopf gelöst werden, sodass sich die Kulisse mit dem Zahnkranzabschnitt wieder nach oben bewegt und der Zapfen wieder in einen Zahnzwischenraum eingreift.

Zum Absenken des Mähwerkes werden die voranstehend beschriebenen Verfahrensschritte vorteilhafterweise in der gleichen Reihenfolge ausgeführt, wobei jedoch das Gehäuse nicht angehoben sondern herunter gedrückt beziehungsweise abgesenkt wird.

Besonders vorteilhaft kann das Drücken des Druckknopfes und das Hochheben beziehungsweise Runterdrücken des Gehäuses mit einer Hand ausgeführt werden, ohne den Handgriff dazwischen loszulassen oder umzugreifen.

Im Folgenden wird die Erfindung anhand eines bevorzugten Ausführungsbeispiels mit Hilfe der Figuren näher beschrieben, wobei nur die zum Verständnis der Erfindung notwendigen Merkmale dargestellt sind.

### KURZBESCHREIBUNG DER ABBILDUNGEN

Es zeigen im Einzelnen:
- FIG 1:: eine schematische Perspektivansicht einer Höhenverstelleinrichtung in einer tiefsten Position,
- FIG 2:: eine schematische Perspektivansicht der Höhenverstelleinrichtung gemäß Figur 1,
- FIG 3:: eine schematische Draufsicht der Höhenverstelleinrichtung gemäß der Figur 1,
- FIG 4:: eine schematische Seitenansicht der Höhenverstelleinrichtung gemäß der Figur 1,
- FIG 5:: eine schematische Perspektivansicht eines nur teilweise montierten Rasenmähers mit der Höhenverstelleinrichtung gemäß der Figur 1,
- FIG 6:: eine schematische Perspektivansicht einer Höhenverstelleinrichtung in einer höchsten Position,
- FIG 7:: eine schematische Perspektivansicht der Höhenverstelleinrichtung gemäß Figur 6,
- FIG 8:: eine schematische Draufsicht der Höhenverstelleinrichtung gemäß der Figur 6,
- FIG 9:: eine schematische Seitenansicht der Höhenverstelleinrichtung gemäß der Figur 6, und
- FIG 10:: eine schematische Perspektivansicht eines nur teilweise montierten Rasenmähers mit der Höhenverstelleinrichtung gemäß der Figur 6.

### DETAILLIERTE BESCHREIBUNG DER ERFINDUNG

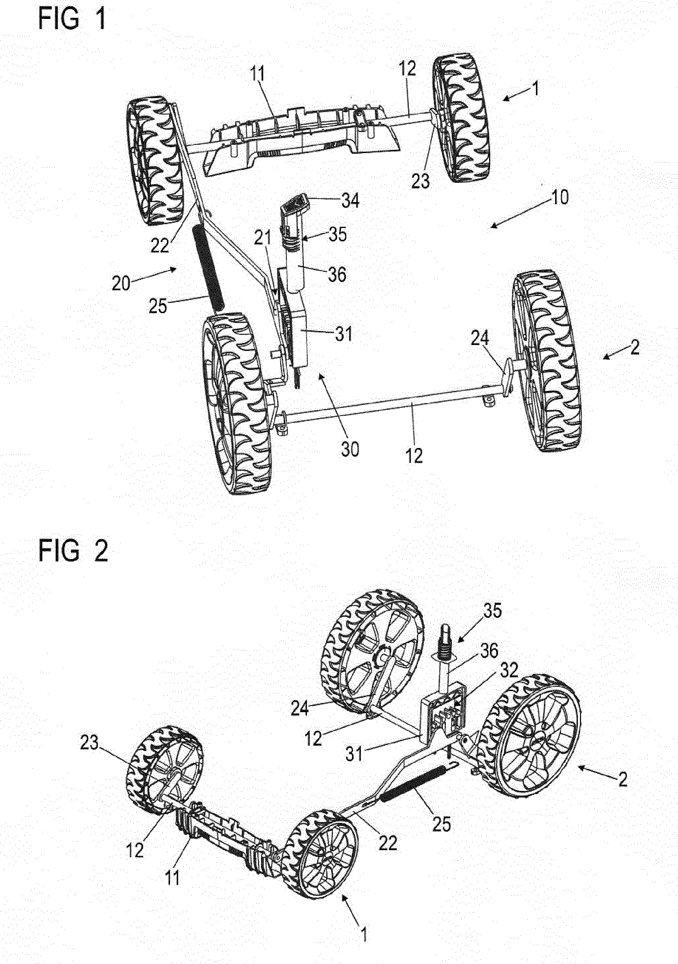

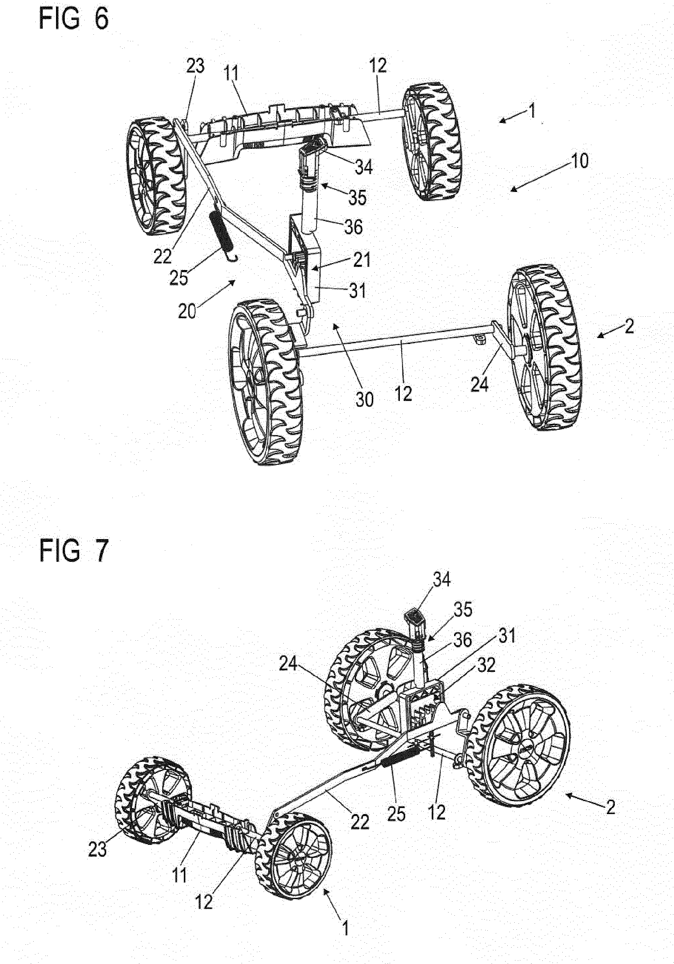

Die Figuren 1 bis 5 zeigen eine Höhenverstelleinrichtung 10 in einer tiefsten Position und die Figuren 6 bis 10 zeigen diese Höhenverstelleinrichtung 10 in einer höchsten Position, jeweils in mehreren Ansichten.

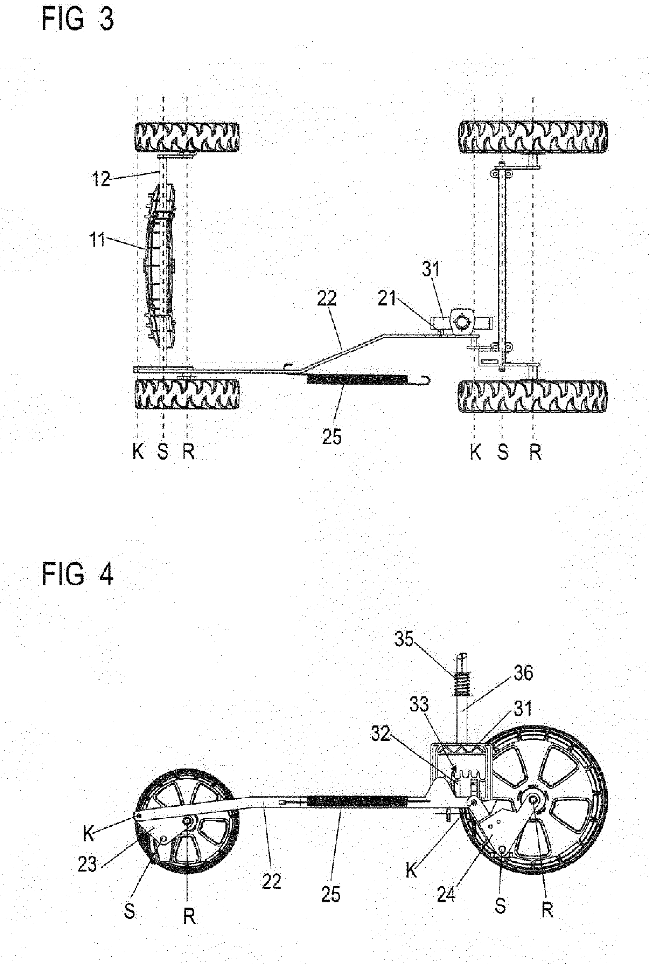

In der **Figur 1** ist eine schematische Perspektivansicht einer Höhenverstelleinrichtung 10 in einer tiefsten Position gezeigt. Die Höhenverstelleinrichtung 10 dient zum Einstellen der Schnitthöhe eines hier nicht dargestellten Mähwerkes, wobei die Höhenverstelleinrichtung 10 derart abgebildet beziehungsweise eingestellt ist, dass dies einer minimalen Schnitthöhe entspricht. Der hier nicht vollständig dargestellte Rasenmäher umfasst zwei Räderpaare 1, 2. Die Räder der Räderpaare 1, 2 drehen sich beim Mähvorgang um eine Rotationsachse R. Weiterhin sind die Räderpaare 1, 2 jeweils um eine Schwenkachse S schwenkbar gelagert, wobei jeweils die Rotationsachse R ungleich der Schwenkachse S ist, siehe beispielsweise Figuren 3 und 4. Gemäß der Darstellung der Figur 1 sind die Räderpaare 1, 2 in eine beispielhaft gezeigten tiefsten Position geschwenkt.

Weiterhin umfasst die Höhenverstelleinrichtung 10 eine Kopplungseinrichtung 20, die die beiden Schwenkachsen S miteinander koppelt. Die Kopplungseinrichtung 20 umfasst hierzu eine Verbindungsstange 22, die auf der linken Seite des Rasenmähers jeweils endseitig mit den beiden Schwenkachsen S verbunden ist. Es handelt sich hierbei jeweils um eine gelenkige Verbindung, wobei jeweils ein Gelenkteil 23 beziehungsweise 24 über eine Koppelachse K mit der vorderen beziehungsweise hinteren Schwenkachse S verbunden ist. Die drei Achsen - Koppelachse K, Schwenkachse S und Rotationsachse R - sind jeweils parallel zueinander angeordnet.

Die Höhenverstelleinrichtung 10 ist im fertig montierten Zustand mit dem Gehäuse des Rasenmähers verbunden. Zum einen ist das Gehäuse im vorderen Bereich mittels eines Verbindungsteils 11 mit der die vordere Schwenkachse S bildenden Schwenkstange 12 fest verbunden. Zum anderen ist die Verbindungsstange 22 der Kopplungseinrichtung 20 mit dem Gehäuse federbelastet verbunden. Hierzu ist eine Zugfeder 25 vorhanden, die einerseits in die Verbindungsstange 22 eingehängt ist und andererseits in das Gehäuse. Die Zugfeder 25 ist derart vorgespannt, dass sie stets die vordere Schwenkachse S beziehungsweise das vordere Räderpaar 1 nach hinten zieht und somit eine Aufwärtsbewegung des Rasenmähers, also ein Anheben und Vergrößern der eingestellten Höhe, unterstützt.

Zudem umfasst die Höhenverstelleinrichtung 10 eine beweglich an dem hier nicht dargestellten Gehäuse des Rasenmähers gelagerte Betätigungseinrichtung 30, deren manuelles Betätigen die Höhenverstellung des Rasenmähers bewirkt. Die Betätigungseinrichtung 30 weist ein als Druckknopf 34 ausgebildetes Betätigungselement auf, welches aus dem Gehäuse heraus ragt und auf einer in das Gehäuse hinein ragenden Betätigungsstange 36 mittels einer Druckfeder 35 federgelagert ist. Die Druckfeder 35 ist vorgespannt und drückt den Druckknopf 34 nach oben aus dem Gehäuse heraus. Zudem weist die Betätigungseinrichtung 30 eine Kulisse 31 auf, die mit der Betätigungsstange 36 starr verbunden ist. Ein Betätigen und Herunterdrücken des Druckknopfes 34 bewirkt also stets ein Herunterschieben der Kulisse 31. Die Kulisse 31 beinhaltet einen Zahnkranzabschnitt 32 mit mehreren Zähnen und Zahnzwischenräumen 33.

An der Verbindungsstange 22 der Kopplungseinrichtung 20 ist ein als Zapfen 21 ausgebildetes Arretierelement starr und unbeweglich angeordnet. Der Zapfen 21 greift je nach Position in einen Zahnzwischenraum 33 in der Kulisse 31 ein. Je nachdem, in welchem Zahnzwischenraum 33 sich der Zapfen 21 befindet, ist eine andere Position beziehungsweise Höhe eingestellt. In der hier dargestellten tiefsten Position ist der Zapfen 21 in dem ganz linken beziehungsweise vorderen Zahnzwischenraum 33 positioniert.

In der **Figur 2** ist eine schematische Perspektivansicht der Höhenverstelleinrichtung 10 gemäß Figur 1 gezeigt. Aus dieser Perspektive ist besonders die Kulisse 31 der Kopplungseinrichtung gut zu erkennen. Die Kulisse 31 ist rechteckig ausgebildet und in der Nähe des hinteren Räderpaares 2 angeordnet. In der äußeren Kulisse 31 ist der nach oben gebogene Zahnkranzabschnitt 32 mit mehreren Zähnen und nach oben offenen Zahnzwischenräumen 33 angeordnet. In der hier gezeigten Ausführungsform weist der Zahnkranzabschnitt 32 sechs Zahnzwischenräume 33 auf. Die Form der Zahnzwischenräume 33 entspricht der Form des Zapfens 21, sodass der Zapfen 21 form- und kraftschlüssig in den jeweiligen Zahnzwischenraum 33 eingreift. Jeder Zahnzwischenraum 33 entspricht einer Höhe des Mähwerkes. Das heißt, gemäß dieser beispielhaften Ausführungsform kann das Mähwerk auf sechs unterschiedliche Schnitthöhen eingestellt werden.

In der **Figur 3** ist eine schematische Draufsicht der Höhenverstelleinrichtung 10 gemäß der Figur 1 gezeigt. Die Verbindungsstange 22 ist auf der linken Seite angeordnet. Die Reihenfolge der über die Verbindungsstange 21 verbundenen Bauteile vom vorderen Räderpaar 1 zum hinteren Räderpaar 2 ist wie folgt: vordere Schwenkstange 12 des vorderen Räderpaares 1 - Schwenkachse S - vorderes Gelenkteil 23 - Kopplungsachse K - Verbindungsstange 21 - Kopplungsachse K - hinteres Gelenkteil 24 - Schwenkachse S - hintere Schwenkstange 12 des hinteren Räderpaares 2. Die Achsen K, S, R sind miteinander gelenkig verbunden und haben je nach eingestellter Höhe eine relativ zueinander unterschiedliche Position, bilden jedoch ein Dreieck aus.

In der **Figur 4** ist eine schematische Seitenansicht der Höhenverstelleinrichtung 10 gemäß der Figur 1 gezeigt. Zur besseren Übersicht ist hier auf die Darstellung der beiden linken Räder verzichtet. Von der Seite ist daher zu sehen, dass die drei Achsen K, S, R vorne und hinten jeweils im Dreieck zueinander angeordnet sind. Ein Verschwenken des vorderen Räderpaares 1 wird mittels der Verbindungsstange 22 auf das hintere Räderpaar 2 übertragen, sodass das hintere Räderpaar 2 verschwenkt wird. Die Auslenkung der Schwenkbewegungen der beiden Räderpaare 1, 2 um die Schwenkachsen S unterscheidet sich je nach Raddurchmesser, Abmessungen der einzelnen Bauteile etc., wobei jedoch das Mähwerk in allen eingestellten Höhen annähernd waagrecht ist.

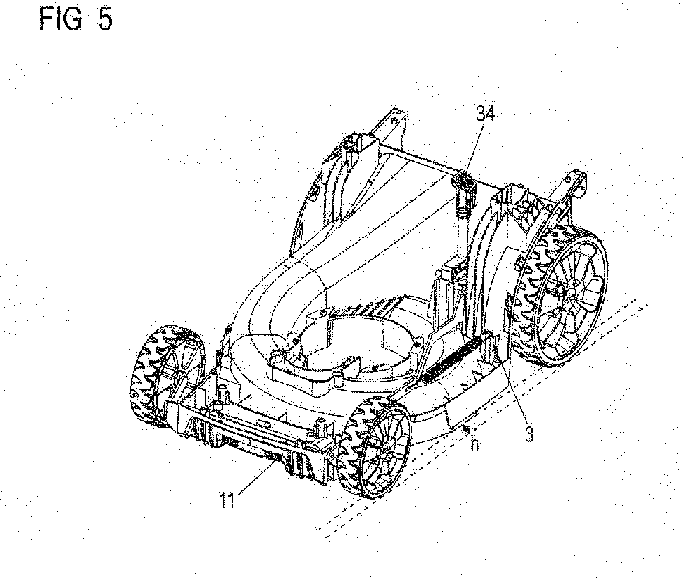

In der **Figur 5** ist noch eine schematische Perspektivansicht eines nur teilweise montierten Rasenmähers mit einer Höhenverstelleinrichtung 10 in der tiefsten Position gemäß den Figuren 1 bis 4 gezeigt. Der handgeführte Rasenmäher umfasst in dieser teilweise montierten Situation noch ein unteres Gehäuseteil 3 eines Gehäuses, an beziehungsweise unter dem ein hier nicht dargestelltes Mähwerk befestigt ist. Das Gehäuseteil 3 ist fest mit dem Verbindungsteil 11 an der vorderen Schwenkachse S des vorderen Räderpaares 1 verbunden. Gemäß der hier gezeigten Darstellung ist das Gehäuse beziehungsweise das Mähwerk in der tiefsten Position, also mit minimaler Schnitthöhe h, eingestellt. Die Zugfeder 25, welche die Kopplungseinrichtung 20, genauer gesagt die Verbindungsstange 22 mit dem Gehäuse verbindet, ist mit dem hinteren Ende in einen Haken 4 an dem Gehäuseteil 3 eingehakt. Die Zugfeder 25 ist vorgespannt, sodass das vordere Räderpaar 1 nach hinten gezogen wird.

Die Figuren 6 bis 10 zeigen die Höhenverstelleinrichtung 10 zum Vergleich in einer höchsten Position. Die Ausführung der Höhenverstelleinrichtung 10 entspricht den Figuren 1 bis 5. Im Folgenden wird daher lediglich auf die Unterschiede in Bezug auf die eingestellte höchste Position eingegangen. Gleiche Bauteile sind mit gleichen Bezugszeichen gekennzeichnet.

In der höchsten eingestellten Position sind die Räderpaare 1, 2 derart um die Schwenkachsen S verschwenkt, dass der Abstand des Gehäuses zum Boden maximal ist und somit auch zumindest die vordere Schwenkachse S, an der das Gehäuse fixiert ist, möglichst weit oben ist, siehe schematische Perspektivansicht der **Figur 6****.** Weiterhin wird die Zugfeder 25 in der höchsten Position, im Vergleich zur tiefsten Position, deutlich entspannt beziehungsweise verkürzt, da sich die Verbindungsstange 22 beim Verschwenken der Räderpaare 1, 2 in die höchste Position nach hinten bewegt.

Entsprechend ist auch der Zapfen 21, welcher starr mit der Verbindungsstange 22 ausgeführt ist, relativ zur Kulisse 31 betrachtet, nach hinten bewegt. In der höchsten Position ist der Zapfen 21 in dem hintersten Zahnzwischenraum 33 positioniert, siehe schematische Perspektivansicht der **Figur 7****.**

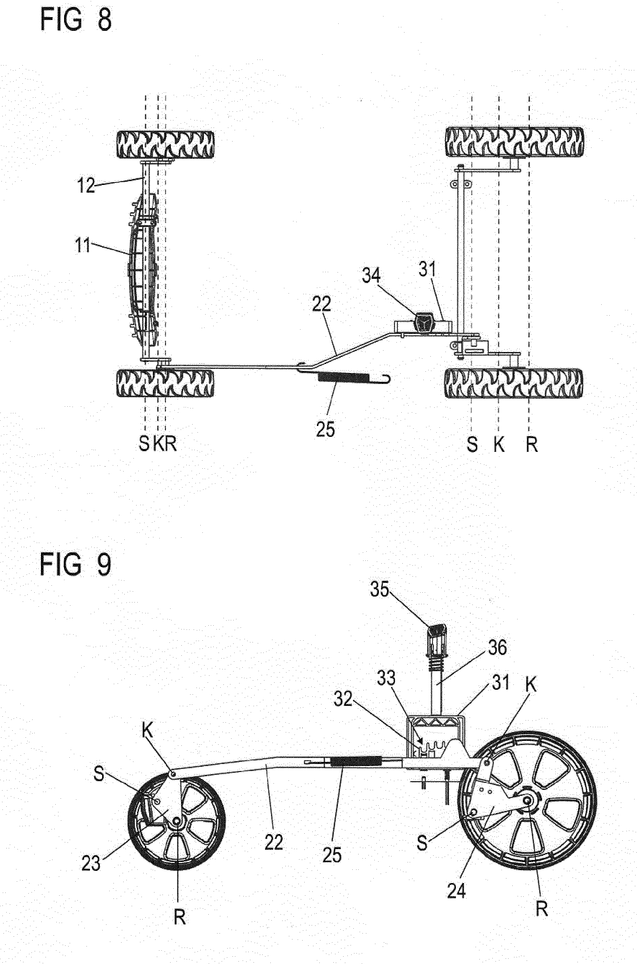

Die Reihenfolge der miteinander verbundenen Bauteile vom vorderen Räderpaar 1 zum hinteren Räderpaar 2 ist unverändert. Allerdings hat sich aufgrund der Schwenkbewegung der Räderpaare 1, 2 die Position der Achsen K, S, R relativ zueinander verändert, siehe schematische Draufsicht der **Figur 8****.** Die Schwenkachsen S sind jeweils vor den Koppelachsen K, die Rotationsachse R liegt hinten. In der Figur 8 ist zudem gut zu erkennen, dass die Zugfeder 24 deutlich kürzer und entspannt ist im Vergleich zur tiefsten Position, siehe beispielsweise Figur 3.

In der **Figur 9** ist eine schematische Seitenansicht gezeigt; zur besseren Übersicht ohne die linken Räder. Die drei Achsen K, S, R vorne und hinten sind weiterhin jeweils im Dreieck zueinander angeordnet, wobei sich jedoch die Ausrichtung des Dreiecks geändert hat. Die Koppelachsen K sind jeweils über den Schwenkachsen S und den am tiefsten gelegenen Rotationsachsen R positioniert.

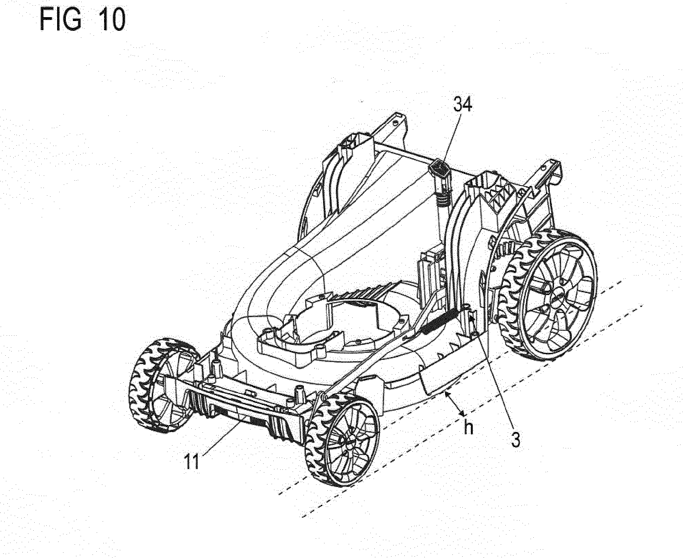

In der **Figur 10** ist noch eine schematische Perspektivansicht eines nur teilweise montierten Rasenmähers in der höchsten Position gemäß den Figuren 5 bis 8 gezeigt. Das Gehäuseteil 3 weist einen deutlich größeren Abstand zum Boden auf und die damit eingestellte Schnitthöhe h ist deutlich größer.

Zum Verstellen der Schnitthöhe von einer tiefen Position in eine höhere Position wird zunächst der Druckknopf 34 manuell runter ^ gedrückt. Dabei wird die Kulisse 31 mit nach unten geschoben, sodass der Zapfen 21 nicht mehr in einen der Zahnzwischenräume 33 eingreift. Dann kann als nächstes das Gehäuse an einem in unmittelbarer Nähe des Druckknopfes 34 angeordneten Handgriff manuell angehoben werden. Dabei werden die Räderpaare 1, 2 um die Schwenkachsen S geschwenkt. Ist die gewünschte Höhe des Gehäuses erreicht, wird der Druckknopf 34 losgelassen. Dieser bewegt sich federbelastet wieder nach oben und zieht dabei die Kulisse 31 mit nach oben. Der Zahnkranzabschnitt 32 schiebt sich dabei von unten wieder um den Zapfen 21, sodass dieser schließlich wieder form- und kraftschlüssig in einem anderen Zahnzwischenraum 33 positioniert ist. Die somit eingestellte Schnitthöhe entspricht der Position des Zapfens 21 in der Kulisse 31.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere beschränkt sich die Erfindung nicht auf die angegebenen Merkmalskombinationen, sondern es können auch für den Fachmann offensichtlich ausführbare andere Kombinationen und Teilkombinationen aus den offenbarten Merkmalen gebildet werden. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Ebenso liegt es auch im Rahmen der Erfindung, eine mechanische Umkehr der Funktionen der einzelnen mechanischen Elemente der Erfindung zu bewirken.

### Bezugszeichenliste

- 1: Räderpaar, vorne
- 2: Räderpaar, hinten
- 3: Gehäuseteil
- 4: Haken

- 10: Höhenverstelleinrichtung
- 11: Verbindungsteil
- 12: Schwenkstange

- 20: Kopplungseinrichtung
- 21: Zapfen
- 22: Verbindungsstange
- 23: Gelenkteil, vorne
- 24: Gelenkteil, hinten
- 25: Zugfeder

- 30: Betätigungseinrichtung
- 31: Kulisse
- 32: Zahnkranzabschnitt
- 33: Zahnzwischenraum
- 34: Druckknopf
- 35: Druckfeder
- 36: Betätigungsstange

- h: Schnitthöhe
- K: Koppelachse
- R: Rotationsachse
- S: Schwenkachse

## Patentansprüche

1. Handgeführter Rasenmäher, zumindest aufweisend:
1.1. ein Gehäuse,
1.2. zwei an dem Gehäuse schwenkbar gelagertes Räderpaare (1, 2), und
1.3. eine Höhenverstelleinrichtung (10) zum Einstellen der Schnitthöhe eines Mähwerkes des Rasenmähers, mittels der die Räderpaare (1, 2) um jeweils eine Schwenkachse (S) in mindestens zwei unterschiedliche Positionen verschwenkt werden können, wobei
1.4. die Höhenverstelleinrichtung (10) mindestens eine Kopplungseinrichtung (20) aufweist, über die die Schwenkachsen (S) der Räderpaare (1, 2) miteinander gekoppelt sind,
1.5. eine beweglich an dem Gehäuse gelagerte Betätigungseinrichtung (30) für die Höhenverstelleinrichtung (10), und
1.6. die Betätigungseinrichtung (30) eine Kulisse (31) aufweist, in welche ein starr mit der Kopplungseinrichtung (20) verbundenes Arretierelement in unterschiedliche Positionen eingreift, sodass mit jeder Position des Arretierelementes eine unterschiedliche Position der Räderpaare (1, 2) und eine unterschiedliche Schnitthöhe eingestellt wird, wobei
1.7. die Kopplungseinrichtung (20) mindestens eine Verbindungsstange (22) aufweist, welche die Schwenkachsen (S) der Räderpaare (1, 2) gelenkig miteinander verbindet, und
1.8. das Arretierelement ein Zapfen (21) ist, welcher an der mindestens einen Verbindungsstange (22) angeordnet ist und in die Zahnzwischenräume (33) eines Zahnkranzabschnittes (32) der Kulisse (31) eingreift, **dadurch gekennzeichnet, dass**
1.9. die Betätigungseinrichtung (30) ein manuell betätigbares Druckelement aufweist, welches translatorisch bewegbar ist, um die Kulisse (31) von dem Zapfen (21) zu lösen, wobei
1.10. das Druckelement relativ zu der Kulisse (31) unbeweglich gelagert ist, sodass eine Betätigung des Druckelementes ein Herunterschieben der Kulisse (31) bewirkt, während der Zapfen (21) starr in seiner Position bleibt und sich nicht bewegt.

2. Rasenmäher gemäß dem voranstehenden Patentanspruch 1, **dadurch gekennzeichnet, dass** zumindest die Schwenkachse (S) des vorderen Räderpaares (1) an dem Gehäuse fixiert ist.

3. Rasenmäher gemäß einem der voranstehenden Patentansprüche 1 bis 2, **dadurch gekennzeichnet, dass** die Kulisse (31) einen Zahnkranzabschnitt (32) mit mehreren Zahnzwischenräumen (33) aufweist, in die das Arretierelement eingreift.

4. Rasenmäher gemäß einem der voranstehenden Patentansprüche 1 bis 3, **dadurch gekennzeichnet, dass** die mindestens eine Verbindungsstange (22) jeweils über eine Koppelachse (K) mit den Schwenkachsen (S) der Räderpaare (1, 2) verbunden ist.

5. Rasenmäher gemäß einem der voranstehenden Patentansprüche 1 bis 4, **dadurch gekennzeichnet, dass** das Gehäuse mit der Höhenverstelleinrichtung (10) verbunden ist.

6. Rasenmäher gemäß dem voranstehenden Patentanspruch 5, **dadurch gekennzeichnet, dass** die Kopplungseinrichtung (20) mit dem Gehäuse federbelastet verbunden ist.

7. Rasenmäher gemäß dem voranstehenden Patentanspruch 6, **dadurch gekennzeichnet, dass** eine Zugfeder (25) vorgesehen ist, welche einerseits mit der mindestens einen Verbindungsstange (22) und andererseits mit dem Gehäuse verbunden ist.

8. Rasenmäher gemäß einem der voranstehenden Patentansprüche 1 bis 7, **dadurch gekennzeichnet, dass** das Gehäuse einen Handgriff aufweist.

9. Rasenmäher gemäß einem der voranstehenden Patentansprüche 1 bis 8, **dadurch gekennzeichnet, dass** am Gehäuse eine Anzeige angeordnet ist, auf der die jeweils eingestellte Position und/oder Schnitthöhe angezeigt wird.

10. Rasenmäher gemäß dem voranstehenden Patentanspruch 9, **dadurch gekennzeichnet, dass** die Anzeige mit dem Arretierelement gekoppelt ist, sodass eine Änderung der Position des Arretierelementes in dem Zahnkranzabschnitt (32) eine Änderung der angezeigten Position und/oder Schnitthöhe bewirkt.

11. Verfahren zum Einstellen der Schnitthöhe eines handgeführten Rasenmähers gemäß einem der voranstehenden Patentansprüche 1 bis 10, zumindest aufweisend die folgenden Verfahrensschritte:
11.1. Manuelles, translatorisches Betätigen des Druckelementes zum Lösen des Zahnkranzabschnittes (32) von dem Arretierelement,
11.2. Manuelles Anheben oder Absenken des Gehäuses und dabei Verschwenken der Räderpaare (1, 2) in eine andere Position, und
11.3. Loslassen des Druckelementes, wobei das Arretierelement wieder in den Zahnkranzabschnitt (32) eingreift und das Mähwerk in einer der Position des Arretierelementes in dem Zahnkranzabschnitt (32) entsprechenden Schnitthöhe eingestellt ist, wobei das Druckelement sich relativ zu der Kulisse (31) nicht bewegt, sodass eine Betätigung des Druckelementes ein Herunterschieben der Kulisse (31) bewirkt, während der Zapfen (21) starr in seiner Position bleibt und sich nicht bewegt.

## Claims

1. Hand-push lawnmower at least having:
1.1 a housing,
1.2 two pairs (1, 2) of wheels, which are mounted pivotably on the housing, and
1.3 a height-adjustment device (10), which is intended for adjusting the cutting height of a mowing unit of the lawnmower and by means of which the pairs (1, 2) of wheels can be pivoted, about a respective axial pivot (S), into at least two different positions, wherein
1.4 the height-adjustment device (10) has at least one coupling device (20), via which the axial pivots (S) of the pairs (1, 2) of wheels are coupled to one another,
1.5 an actuating device (30) for the height-adjustment device (10), the actuating device being mounted in a movable manner on the housing, and
1.6 the actuating device (30) has a guide-track unit (31), in which an arresting element, which is connected rigidly to the coupling device (20), engages in different positions so that, in each position of the arresting element, a different position of the pairs (1, 2) of wheels and a different cutting height are adjusted, wherein
1.7 the coupling device (20) has at least one connecting rod (22), which connects the axial pivots (S) of the pairs (1, 2) of wheels to one another in an articulated manner, and
1.8 the arresting element is a stub (21), which is arranged on the at least one connecting rod (22) and engages in the tooth interspaces (33) of a toothed-ring portion (32) of the guide-track unit (31), **characterized in that**
1.9 the actuating device (30) has a manually actuable pressure-exerting element, which can be moved in translatory fashion in order to disengage the guide-track unit (31) from the stub (21), wherein
1.10 the pressure-exerting element is mounted in an immovable manner relative to the guide-track unit (31), so that actuation of the pressure-exerting element causes the guide-track unit (31) to be pushed down, while the stub (21) remains rigidly in position and does not move.

2. Lawnmower according to preceding Claim 1, **characterized in that** at least the axial pivot (S) of the front pair (1) of wheels is fixed on the housing.

3. Lawnmower according to either of preceding Claims 1 and 2, **characterized in that** the guide-track unit (31) has a toothed-ring portion (32) with a plurality of tooth interspaces (33), in which the arresting element engages.

4. Lawnmower according to one of preceding Claims 1 to 3, **characterized in that** the at least one connecting rod (22) is connected to the axial pivots (S) of the pairs (1, 2) of wheels in each case via an axial coupling (K).

5. Lawnmower according to one of preceding Claims 1 to 4, **characterized in that** the housing is connected to the height-adjustment device (10).

6. Lawnmower according to preceding Claim 5, **characterized in that** the coupling device (20) is connected to the housing in a spring-loaded manner.

7. Lawnmower according to preceding Claim 6, **characterized by** the provision of a tension spring (25), which is connected to the at least one connecting rod (22), on the one hand, and to the housing, on the other hand.

8. Lawnmower according to one of preceding Claims 1 to 7, **characterized in that** the housing has a handle.

9. Lawnmower according to one of preceding Claims 1 to 8, **characterized in that** a display is arranged on the housing and displays the respectively adjusted position and/or cutting height.

10. Lawnmower according to preceding Claim 9, **characterized in that** the display is coupled to the arresting element, so that a change in the position of the arresting element in the toothed-ring portion (32) causes a change in the displayed position and/or cutting height.

11. Method for adjusting the cutting height of a hand-push lawnmower according to one of preceding Claims 1 to 10, at least having the following method steps:
11.1. manual, translatory actuation of the pressure-exerting element in order to disengage the toothed-ring portion (32) from the arresting element,
11.2. manual raising or lowering of the housing and, in the process, pivoting of the pairs (1, 2) of wheels into a different position, and
11.3. release of the pressure-exerting element, wherein the arresting element engages again in the toothed-ring portion (32) and the mowing unit is adjusted to a cutting height corresponding to the position of the arresting element in the toothed-ring portion (32), wherein the pressure-exerting element does not move relative to the guide-track unit (31), so that actuation of the pressure-exerting element causes the guide-track unit (31) to be pushed down, while the stub (21) remains rigidly in its position and does not move.

## Revendications

1. Tondeuse à gazon à conducteur marchant, présentant au moins :
1.1. un carter,
1.2. deux paires de roues (1, 2) montées pivotantes sur le carter, et
1.3. un dispositif de réglage en hauteur (10) pour régler la hauteur de coupe d'un mécanisme de coupe de la tondeuse à gazon, au moyen duquel les paires de roues (1, 2) peuvent être pivotées chacune autour d'un axe de pivotement (S) dans au moins deux positions différentes,
1.4. le dispositif de réglage en hauteur (10) présentant au moins un dispositif de couplage (20) par l'intermédiaire duquel les axes de pivotement (S) des paires de roues (1, 2) sont couplés entre eux,
1.5. un dispositif d'actionnement (30) monté mobile sur le carter pour le dispositif de réglage en hauteur (10), et
1.6. le dispositif d'actionnement (30) présentant une coulisse (31) dans laquelle un élément d'arrêt relié rigidement au dispositif de couplage (20) s'engage dans différentes positions, de telle sorte qu'avec chaque position de l'élément d'arrêt, une position différente des paires de roues (1, 2) et une hauteur de coupe différente sont réglées,
1.7. le dispositif de couplage (20) présentant au moins une barre de liaison (22) qui relie entre eux de manière articulée les axes de pivotement (S) des paires de roues (1, 2), et
1.8. l'élément d'arrêt étant un tourillon (21) qui est agencé sur l'au moins une barre de liaison (22) et s'engage dans les espaces interdentaires (33) d'une section de couronne dentée (32) de la coulisse (31), **caractérisée en ce que**
1.9. le dispositif d'actionnement (30) présente un élément de pression pouvant être actionné manuellement, qui peut être déplacé en translation pour dégager la coulisse (31) du tourillon (21),
1.10. l'élément de pression étant monté immobile par rapport à la coulisse (31), de telle sorte qu'un actionnement de l'élément de pression provoque un coulissement vers le bas de la coulisse (31), tandis que le tourillon (21) reste rigidement dans sa position et ne se déplace pas.

2. Tondeuse à gazon selon la revendication 1 précédente, **caractérisée en ce qu'**au moins l'axe de pivotement (S) de la paire de roues avant (1) est fixé au carter.

3. Tondeuse à gazon selon l'une quelconque des revendications 1 à 2 précédentes, **caractérisée en ce que** la coulisse (31) présente une section de couronne dentée (32) avec plusieurs espaces interdentaires (33) dans lesquels s'engage l'élément d'arrêt.

4. Tondeuse à gazon selon l'une quelconque des revendications 1 à 3 précédentes, **caractérisée en ce que** l'au moins une barre de liaison (22) est reliée respectivement aux axes de pivotement (S) des paires de roues (1, 2) par l'intermédiaire d'un axe de couplage (K) .

5. Tondeuse à gazon selon l'une quelconque des revendications 1 à 4 précédentes, **caractérisée en ce que** le carter est relié au dispositif de réglage en hauteur (10).

6. Tondeuse à gazon selon la revendication 5 précédente, **caractérisée en ce que** le dispositif de couplage (20) est relié au carter de manière sollicitée par ressort.

7. Tondeuse à gazon selon la revendication 6 précédente, **caractérisée en ce qu'**il est prévu un ressort de traction (25) qui est relié d'une part à l'au moins une tige de liaison (22) et d'autre part au carter.

8. Tondeuse à gazon selon l'une quelconque des revendications 1 à 7 précédentes, **caractérisée en ce que** le carter présente une poignée.

9. Tondeuse à gazon selon l'une quelconque des revendications 1 à 8 précédentes, **caractérisée en ce qu'**un affichage est agencé sur le carter, sur lequel la position et/ou la hauteur de coupe respectivement réglée est affichée.

10. Tondeuse à gazon selon la revendication 9 précédentes, **caractérisée en ce que** l'affichage est couplé à l'élément d'arrêt, de telle sorte qu'une modification de la position de l'élément d'arrêt dans la section de couronne dentée (32) provoque une modification de la position et/ou de la hauteur de coupe affichée.

11. Procédé de réglage de la hauteur de coupe d'une tondeuse à gazon à conducteur marchant selon l'une quelconque des revendications 1 à 10 précédentes, présentant au moins les étapes de procédé suivantes:
11.1. l'actionnement manuel en translation de l'élément de pression pour dégager la section de couronne dentée (32) de l'élément d'arrêt,
11.2. le soulèvement ou l'abaissement manuel du carter et ainsi le pivotement des paires de roues (1, 2) dans une autre position, et
11.3. le relâchement de l'élément de pression, l'élément d'arrêt s'engageant à nouveau dans la section de couronne dentée (32) et la tondeuse étant réglée à une hauteur de coupe correspondant à la position de l'élément d'arrêt dans la section de couronne dentée (32), l'élément de pression ne se déplaçant pas par rapport à la coulisse (31), de telle sorte qu'un actionnement de l'élément de pression provoque un coulissement vers le bas de la coulisse (31), tandis que le tourillon (21) reste rigidement dans sa position et ne se déplace pas.
